# EUROPEAN PATENT SPECIFICATION

(11) **EP 1 277 163 B1**
(45) Date of publication and mention of the grant of the patent: **24.11.2010**
(21) Application number: 01927302.8
(22) Date of filing: 23.04.2001
(51) Int. Cl.: G06K 7/00

(54) **RFID READER OUTPUT CONTROL APPARATUS AND METHOD**
RFID-LESER AUSGANGSTEUERUNGSVORRICHTUNG UND -VERFAHREN
DISPOSITIF ET PROCEDE DE CONTROLE DE SORTIE D'UN LECTEUR RFID

(30) Priority: 26.04.2000 US 559235
(43) Date of publication of application: 22.01.2003
(73) Proprietor: Sensormatic Electronics, LLC, Boca Raton, FL 33487 (US)
(72) Inventor: SHAFER, G., Mark, Boca Raton, FL 33496 (US)
(74) Representative: Wright, Howard Hugh Burnby
(86) International application number: PCT/US2001/013078
(87) International publication number: WO 2001/082213

(56) References cited:
- EP-A- 0 722 094
- EP-A- 0 827 100
- EP-A- 0 944 014

## Description

### BACKGROUND OF THE INVENTION

### Field of the Invention

This invention relates to radio frequency identification (RFID) systems and more particularly to controlling the transmitter output power level of an RFID reader based upon the standing wave ratio (SWR) of the transmitted RF signal.

### Description of the Related Art

RFID systems are increasingly used for a variety of applications including inventory control and monitoring. Handheld RFID readers may be used indoors as well as outdoors, and may be battery powered. In RFID systems, an RFID reader transmits an RFID interrogation signal, which is an RF signal. An RFID marker receives the transmitted RF signal and responds with a reply signal that includes identification information and other data as known in the art. The RFID reader receives the RFID marker's reply signal and recovers the relevant information contained within the signal. The RFID marker must be within a predetermined maximum radius from the RFID reader for the RFID reader to be able to detect and retrieve data from the RFID marker's reply signal. This predetermined maximum radius for a proper RFID read is termed the maximum RFID read range. If the RFID reader does not point to an object that is within the maximum RFID read range of a RFID marker, the RFID reader will continue to transmit an RFID interrogation signal that will be radiated into the environment, and, if battery powered, will continue to discharge the battery. Therefore, it is desirable to control the RF output power level of RFID readers so that when an object is not within the maximum read range for reading an RFID marker, the RF output power level will be set to a low power mode.

EP-A-0944014 discloses apparatus for switching an RFID transmitter from low power to high power according to a threshold determined from a sample and hold technique related to decoy of a ring signal wave form. The use of a voltage averaging technique is also described.

EP-A-0827100 discloses a transmit/receive RFID device for communication, and having a memory for storing a database of an inventory of objects.

### BRIEF SUMMARY OF THE INVENTION

An apparatus and method for determining if an object is within a maximum radius for reading an RFID marker from an RFID reader based upon the measured SWR of the transmitted RF signal from the RFID reader. The output power level of the RFID reader is controlled according to the measured SWR.

Objectives, advantages, and applications of the present invention will be made apparent by the following detailed description of embodiments of the invention.

### BRIEF DESCRIPTION OF THE SEVERAL VIEWS OF THE DRAWINGS

Figure 1 is a block diagram of one embodiment of the present invention.
Figure 2 is a block diagram of an RFID system using one embodiment of the invention.
Figure 3 is a flow chart of a method of operation of that shown in Fig. 1.

### DETAILED DESCRIPTION OF THE INVENTION

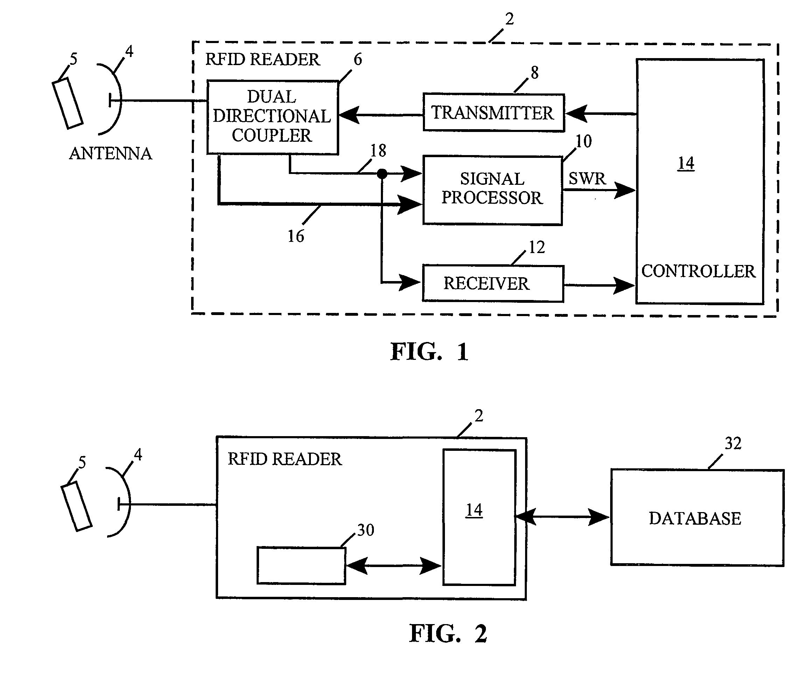

Referring to Fig. 1, a block diagram of RFID reader 2 is illustrated including antenna 4, dual directional coupler 6, transmitter 8, signal processor 10, receiver 12, and controller 14. Controller 14 controls transmitter 8 to transmit an RFID interrogation signal at a preselected RF output level. Transmitter 8 sends the RFID interrogation signal through dual directional coupler 6, to antenna 4 to be radiated outward. Any RFID marker 5, which receives the RFID interrogation sign, responds with a reply signal that includes identification information. The forward RF signal 16, which is the transmitted RFID interrogation signal taken from dual directional coupler 6, is fed into the signal processor 10. Dual directional coupler 6 is a known device disposed between antenna 4 and transmitter 8 that allows access to the transmitted or forward RF signal 16 and reflected RF signal 18. The reflected RF signal 18 from dual directional coupler 6 is fed into the signal processor 10, and into receiver 12. Reflected RF signal 18 is the transmitted RFID interrogation signal that is reflected from objects in the vicinity of antenna 4. Signal processor 10 takes the ratio of the forward RF signal 16 to the reflected RF signal 18 to determine the SWR. The level of SWR indicates the amount of transmitted signal that is reflected back to antenna 4. Increasing the number or size of objects in the vicinity of antenna 4 increases the level of SWR. The SWR is then sent to controller 14. Controller 14 uses the SWR to determine the proper RF output power level to select for transmitter 8. The controller 14 will select a high RF output power level for a high SWR indicating that an object is within the maximum radius from the RFID reader to properly read an RFID marker.

When transmitter 8 sends the RFID interrogation signal to antenna 4 to be radiated outward, any RFID marker 5 which receives the RFID interrogation signal responds with a reply signal that includes identification information and/or other data. The reflected RF signal 18, from dual directional coupler 6, is sent to receiver 12. Receiver 12 detects signals from any RFID markers (5) that are included in reflected RF signal 18, and transfers the identification information/data to controller 14 for further processing. Receiver 12 may condition the received RFID signals for proper reading of the information/data by the controller 14.

In operation, when the RFID reader 2 is pointed toward an object to read an RFID marker that is attached, connected, or in some way associated with the object, and the object is within the maximum RFID read range, the SWR will be high due to the reflected RF signal from the object, and controller 14 will set transmitter 8 to a high output level. The maximum RFID read range will vary according to the frequency of operation and power level of the specific RFID reader, and is readily determinable by one of ordinary skill in the art. If the RF reader 2 is pointed away from objects, or if the object is beyond the maximum RFID read range, the SWR will be low and controller 14 will set transmitter 8 to a low output level. When the RFID reader 2 is being used to read RFID markers, the RFID reader 2 will be pointed toward objects, which may have RFID markers attached, and a high SWR is expected. Therefore, the output power level is set high when the RFID reader 2 is actually being used to read RFID markers. When the RFID reader 2 is not being pointed toward an object and an RFID marker 5 is not attempting to be read, or if the object is beyond the maximum RFID read range, the SWR will be low and the controller 14 will set the output power level low. When the RFID reader 2 is being used outdoors, the invention prevents high output power level RF signals to be transmitted into the environment, which can permit the use of the RFID reader 2 in areas that may have stringent RF emission standards. When used indoors, the RFID reader 2 will be set to a low output level if pointing away from objects, such as when pointed out into an expansive warehouse or toward objects that are out of RFID marker read range. Battery powered RFID readers will benefit from the inventive output power level control by only being set to high power mode when an object is within the maximum RFID read range for reading an RFID marker.

Signal processor 10 and receiver 12 can be implemented in analog hardware, digital hardware, software, or in a combination of hardware and software, and may take the form of a single signal processor. In one embodiment, controller 14 can take the forward and reflected RF signals and convert them to DC voltages, which are then compared to determine the SWR, which is output to controller 14 as a DC voltage. The SWR can alternately be determined digitally, and the SWR that is sent to controller 14 would take the form of a digital word. Controller 14 preferably includes a programmable microprocessor, but can be implemented using analog and/or digital circuitry. Transmitter 8 can be a conventional RFID transmitter adapted to include output power level control from controller 14. Referring to Fig. 2, controller 14 may include memory 30 to maintain a database of RFID information and data corresponding to an inventory of objects, and/or may interface with a fixed system that includes a larger database 32 of objects and information, which is remote from RFID reader 2.

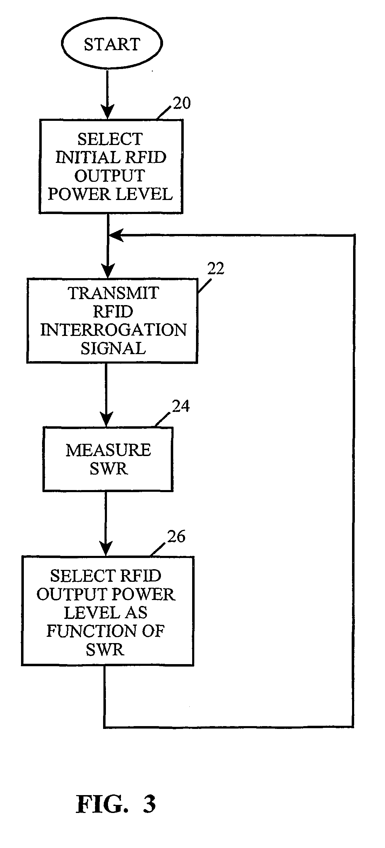

Referring to Fig. 3, a method of operation of one embodiment of the present invention is illustrated. In step 20, the initial RF output power level for transmitter 8 is selected by controller 14. The initial RF output power level can be manually selected by an operator or preset in hardware or software. If the output power level is preset to a low level, the RFID reader 2 will always initially operate in a low power mode. In step 22, the RFID interrogation signal is transmitted. In step 24, the forward and reflected RF signals are compared by the signal processor 10 to calculate the SWR. In step 26, the controller 14 selects the output power level according to the calculated SWR. The output power level control from controller 14 can be one of two levels, such as high power for high SWR, and low power for low SWR, or alternately, controller 14 can select an output power level comprising a range that is a function of the calculated SWR.

It is to be understood that variations and modifications of the present invention can be made without departing from the scope of the invention. It is also to be understood that the scope of the invention is not to be interpreted as limited to the specific embodiments disclosed herein, but only in accordance with the appended claims when read in light of the forgoing disclosure.

## Claims

1. A method for controlling the transmit power level of an RFID reader, comprising:
transmitting an RFID interrogation signal at an RFID output power level;
receiving an RFID reflected signal;
comparing the ratio of said RFID interrogation signal to said RFID reflected signal to determine a standing wave ratio (SWR); and,
adjusting the RFID output power level as a function of the SWR, wherein the higher the SWR, the higher the power output level, and the lower the SWR, the lower the power output level.

2. The method of claim 1 wherein the RFID output power level of the RFID transmitter is preset to a low power mode.

3. The method of claim 1 or claim 2 wherein prior to comparing the ratio of said RFID interrogation signal to said RFID reflected signal, said RFID interrogation signal and said RFID reflected signal are converted to DC voltage levels.

4. The method of claim 1 or claim 2 wherein prior to comparing the ratio of said RFID interrogation signal to said RFID reflected signal, said RFID interrogation signal and said RFID reflected signal are converted to digital signals.

5. The method of any preceding claim wherein the RFID output power level is adjustable between a low power mode and a high power mode corresponding to a relatively low SWR and a relatively high SWR, respectively, the RFID output power level being determined according to a range that is a function of said SWR.

6. An apparatus (2) for controlling the transmit power level of an RFID reader, comprising:
transmitter means (8) for transmitting an RFID interrogation signal at an RFID output power level; and
receiver means (12) for receiving an RFID reflected signal;
**characterized in that** said apparatus further comprises:
processor means (10) for comparing said RFID interrogation signal and said RFID reflected signal to determine a standing wave ratio (SWR); and,
controller means (14) for adjusting the RFID output power level as a function of said SWR, wherein the higher the SWR, the higher the power output level, and the lower the SWR, the lower the power output level.

7. The apparatus (2) of claim 6 wherein the RFID output power level is preset to a low power mode.

8. The apparatus of claim 6 or claim 7 wherein said processor means (10) includes means for converting said RFID interrogation signal and said RFID reflected signal to DC voltage levels.

9. The apparatus of claim 6 or claim 7 wherein said processor means (10) includes means for converting said RFID interrogation signal and said RFID reflected signal to digital signals.

10. The apparatus of any preceding claim wherein the RFID output power level is adjustable between a low power mode and a high power mode corresponding to a relatively low SWR and a relatively high SWR, respectively, the RFID output power level being determined according to a range that is a function of said SWR.

11. The apparatus of any of claims 6-10 wherein said RFID reflected signal includes RFID data from an RFID marker.

12. The apparatus of any of claims 6-11 and further including a memory (30) for storing a database of information corresponding to an inventory of objects, said database storing an indication of said RFID data received by said receiver from said RFID marker.

13. The apparatus of claim 12 wherein said database (32) of information is located remotely from said RFID reader.

## Patentansprüche

1. Verfahren zum Regeln des Sendeleistungspegels eines RFID-Lesegeräts, umfassend folgende Schritte:
Senden eines RFID-Abfragesignals auf einem RFID-Ausgangsleistungspegel;
Empfangen eines reflektierten RFID-Signals;
Vergleichen des Verhältnisses zwischen dem RFID-Abfragesignal und dem reflektierten RFID-Signal, um ein Stehwellenverhältnis (SWR) zu bestimmen; und
Anpassen des RFID-Ausgangsleistungspegels in Abhängigkeit von dem SWR, wobei je höher das SWR, desto höher der Leistungsausgangspegel, und je niedriger das SWR, desto niedriger der Leistungsausgangspegel.

2. Verfahren nach Anspruch 1, wobei der RFID-Ausgangsleistungspegel des RFID-Senders auf einen Niederleistungsmodus voreingestellt ist.

3. Verfahren nach Anspruch 1 oder Anspruch 2, wobei vor dem Vergleichen des Verhältnisses zwischen dem RFID-Abfragesignal und dem reflektierten RFID-Signal das RFID-Abfragesignal und das reflektierte RFID-Signal in Gleichspannungspegel konvertiert werden.

4. Verfahren nach Anspruch 1 oder Anspruch 2, wobei vor dem Vergleichen des Verhältnisses zwischen dem RFID-Abfragesignal und dem reflektierten RFID-Signal das RFID-Abfragesignal und das reflektierte RFID-Signal in Digitalsignale konvertiert werden.

5. Verfahren nach einem der vorhergehenden Ansprüche, wobei der RFID-Ausgangsleistungspegel zwischen einem Niederleistungsmodus und einem Hochleistungsmodus anpassbar ist, die jeweils einem relativ niedrigen SWR und einem relativ hohen SWR entsprechen, wobei der RFID-Ausgangsleistungspegel gemäß einem Bereich bestimmt wird, der von dem SWR abhängig ist.

6. Gerät (2) zum Regeln des Sendeleistungspegels eines RFID-Lesegeräts, umfassend:
Sendemittel (8), um ein RFID-Abfragesignal auf einem RFID-Ausgangsleistungspegel zu senden; und
Empfangsmittel (12), um ein reflektiertes RFID-Signal zu empfangen ;
**dadurch gekennzeichnet, dass** das Gerät ferner Folgendes umfasst:
Verarbeitungsmittel (10) zum Vergleichen des RFID-Abfragesignals mit dem reflektierten RFID-Signal, um ein Stehwellenverhältnis zu bestimmen (SWR); und
Regelmittel (14) zum Anpassen des RFID-Ausgangsleistungspegels in Abhängigkeit von dem SWR, wobei je höher das SWR, desto höher der Leistungsausgangspegel, und je niedriger der SWR, desto niedriger der Leistungsausgangspegel.

7. Gerät (2) nach Anspruch 6, wobei der RFID-Ausgangsleistungspegel auf einen Niederleistungsmodus voreingestellt ist.

8. Gerät nach Anspruch 6 oder Anspruch 7, wobei die Verarbeitungsmittel (10) Mittel zum Konvertieren des RFID-Abfragesignals und des reflektierten RFID-Signals in Gleichspannungspegel umfassen.

9. Verfahren nach Anspruch 6 oder Anspruch 7, wobei die Verarbeitungsmittel (10) Mittel zum Konvertieren des RFID-Abfragesignals und des reflektierten RFID-Signals in Digitalsignale umfassen.

10. Gerät nach einem der vorhergehenden Ansprüche, wobei der RFID-Ausgangsleistungspegel zwischen einem Niederleistungsmodus und einem Hochleistungsmodus anpassbar ist, die jeweils einem relativ niedrigen SWR und einem relativ hohen SWR entsprechen, wobei der RFID-Ausgangsleistungspegel gemäß einem Bereich bestimmt wird, der von dem SWR abhängig ist.

11. Gerät nach einem der Ansprüche 6 bis 10, wobei das reflektierte RFID-Signal RFID-Daten aus einem RFID-Marker umfasst.

12. Gerät nach einem der Ansprüche 6 bis 11, und ferner umfassend einen Speicher (30) zum Speichern einer Datenbank mit Informationen, die einem Bestand von Objekten entsprechen, wobei die Datenbank eine Angabe der von dem Empfänger aus dem RFID-Marker empfangenen Daten speichert.

13. Gerät nach Anspruch 12, wobei die Informationsdatenbank (32) sich von dem RFID-Lesegerät entfernt befindet.

## Revendications

1. Procédé de commande du niveau de puissance d'émission d'un lecteur RFID, comprenant les étapes consistant à :
émettre un signal d'interrogation RFID à un niveau de puissance de sortie RFID ;
recevoir un signal RFID réfléchi ;
comparer le rapport entre ledit signal d'interrogation RFID et ledit signal RFID réfléchi pour déterminer un rapport d'onde stationnaire (SWR) ; et
ajuster le niveau de puissance de sortie RFID en fonction du SWR, dans lequel, plus le SWR est élevé, plus le niveau de sortie de puissance est élevé, et plus le SWR est bas, plus le niveau de sortie de puissance est bas.

2. Procédé selon la revendication 1, dans lequel le niveau de puissance de sortie RFID de l'émetteur RFID est préréglé sur un mode basse puissance.

3. Procédé selon la revendication 1 ou la revendication 2, dans lequel, avant de comparer le rapport entre ledit signal d'interrogation RFID et ledit signal RFID réfléchi, ledit signal d'interrogation RFID et ledit signal RFID réfléchi sont convertis en niveaux de tension continue.

4. Procédé selon la revendication 1 ou la revendication 2, dans lequel, avant de comparer le rapport entre ledit signal d'interrogation RFID et ledit signal RFID réfléchi, ledit signal d'interrogation RFID et ledit signal RFID réfléchi sont convertis en signaux numériques.

5. Procédé selon l'une quelconque des revendications précédentes, dans lequel le niveau de puissance de sortie RFID est ajustable entre un mode basse puissance et un mode haute puissance correspondant à un SWR relativement bas et un SWR relativement élevé, respectivement, le niveau de puissance de sortie RFID étant déterminé selon une plage qui est fonction dudit SWR.

6. Appareil (2) de commande du niveau de puissance d'émission d'un lecteur RFID, comprenant :
des moyens d'émission (8) pour émettre un signal d'interrogation RFID à un niveau de puissance de sortie RFID ; et
des moyens de réception (12) pour recevoir un signal RFID réfléchi ;
**caractérisé en ce que** ledit appareil comprend en outre :
des moyens de processeur (10) pour comparer ledit signal d'interrogation RFID et ledit signal RFID réfléchi pour déterminer un rapport d'onde stationnaire (SWR) ; et
des moyens de commande (14) pour ajuster le niveau de puissance de sortie RFID en fonction dudit SWR, dans lequel, plus le SWR est élevé, plus le niveau de sortie de puissance est élevé, et plus le SWR est bas, plus le niveau de sortie de puissance est bas.

7. Appareil (2) selon la revendication 6, dans lequel le niveau de puissance de sortie RFID est préréglé sur un mode basse puissance.

8. Appareil selon la revendication 6 ou la revendication 7, dans lequel les moyens de processeur (10) comprennent des moyens pour convertir ledit signal d'interrogation RFID et ledit signal RFID réfléchi en niveaux de tension continue.

9. Procédé selon la revendication 6 ou la revendication 7, dans lequel lesdits moyens de processeur (10) comprennent des moyens pour convertir ledit signal d'interrogation RFID et ledit signal RFID réfléchi en signaux numériques.

10. Appareil selon l'une quelconque des revendications précédentes, dans lequel le niveau de puissance de sortie RFID est ajustable entre un mode basse puissance et un mode haute puissance correspondant à un SWR relativement bas et à un SWR relativement élevé, respectivement, le niveau de puissance de sortie RFID étant déterminé selon une plage qui est fonction dudit SWR.

11. Appareil selon l'une quelconque des revendications 6 à 10, dans lequel le signal RFID réfléchi comprend des données RFID provenant d'un marqueur RFID.

12. Appareil selon l'une quelconque des revendications 6 à 11, et comprenant en outre une mémoire (30) pour stocker une base de données d'informations correspondant à un inventaire d'objets, ladite base de données stockant une indication desdites données RFID reçues par ledit récepteur à partir dudit marqueur RFID.

13. Appareil selon la revendication 12, dans lequel ladite base de données (32) d'informations est située à distance dudit lecteur RFID.
